# EUROPEAN PATENT SPECIFICATION

(11) **EP 4 361 709 B1**
(45) Date of publication and mention of the grant of the patent: **07.05.2025**
(21) Application number: 22306620.0
(22) Date of filing: 26.10.2022
(51) Int. Cl.: G02C 7/08, G02C 7/10, G02B 27/01, G06F 3/00

(54) **COMPUTER-IMPLEMENTED METHOD FOR MODIFYING A CONTROL MODE BASED ON USER INPUTS**
COMPUTERIMPLEMENTIERTES VERFAHREN ZUR MODIFIZIERUNG EINES STEUERUNGSMODUS AUF BASIS VON BENUTZEREINGABEN
PROCÉDÉ MIS EN UVRE PAR ORDINATEUR POUR MODIFIER UN MODE DE COMMANDE SUR LA BASE D'ENTRÉES D'UTILISATEUR

(43) Date of publication of application: 01.05.2024
(73) Proprietor: Essilor International, 94220 Charenton-Le-Pont (FR)
(72) Inventor: GOURRAUD, Alexandre, 94120 FONTENAY SOUS BOIS (FR); LE CAIN, Aurelie, 94000 CRETEIL (FR)
(74) Representative: Jacobacci Coralis Harle

(56) References cited:
- US-A1- 2017 312 614
- US-A1- 2017 358 139
- US-A1- 2019 011 730
- US-A1- 2020 050 824
- US-A1- 2020 285 062

## Description

### TECHNICAL FIELD

The disclosure relates to the technical field of variable transmission optical elements.

The disclosure relates more particularly to a computer-implemented method for modifying a control mode of a transmission value of the variable transmission optical element based on user inputs.

### BACKGROUND INFORMATION AND PRIOR ART

In a general way, a variable transmission optical element is an element through which a user may have or need to look through. A variable transmission optical element may comprise in particular an eyewear, for instance equipped with electrochromic lenses, but may also comprise sunglasses, a ski helmet, a welding mask, or event windows, doors or walls of a building.

A variable transmission optical element usually has an adaptative transmission controllable by means of a dedicated control unit. The light transmission, or more simply the transmission, is generally referred to as the tint and can vary from a clear state to a dark state. The control unit usually has in memory data or rules allowing to determine the transmission of the optical lenses at least as a function of an external illumination, which is representative of an ambient light surrounding the optical element. Based on a measure of this external illumination, the transmission of the optical element can be set to an appropriate value. In practice, the greater the external illumination is, the lower the transmission is (the optical element is thus highly tinted). This functioning is often called "automatic mode". The automatic mode is typically predetermined during the development of the optical element.

The variable transmission optical element may also be controlled by means of an interface for receiving user inputs such that the user can adapt the transmission of the variable transmission optical element by himself when he needs it. By means of this interface, the user can request a transmission higher or lower than the one provided by the automatic mode. This functioning is often called "manual mode".

In this context, it has been proposed by document WO2017114759, to take advantage of the user inputs in order to adapt the automatic mode of an electrochromic eyewear by training. The automatic mode is thus personalized in order to be more representative of the preferences of the user.

However, the user may also use the manual mode for singular events such as interacting with other people (by increasing the transmission to establish eye contact) or in case of a headache (by decreasing the transmission). Such user inputs may make the automatic mode inaccurate.

### SUMMARY

Therefore, one object of the disclosure is to provide a method for modifying the automatic mode which is less affected by singular events.

The disclosure proposes more particularly a computer-implemented method for modifying a control mode of a variable transmission optical element based on user inputs, the control mode being designed to control a transmission value of the variable transmission optical element as a function of an external illumination, the method comprising the following steps:
e1) measuring an initial level of the external illumination,
e2) setting the transmission value of the variable transmission optical element to an initial value according to the control mode as a function of the initial level of the external illumination,
e3) acquiring a user input for adjusting a parameter related to the transmission value of the variable transmission optical element,
e4) setting, based on the user input and according to a manual mode, the transmission value of the variable transmission optical element to a requested value,
e5) computing, based on the requested value and on the initial level of the external illumination, a confidence value representative of a likelihood that the requested value is a user preference relative to the initial level of the external illumination,
e6) modifying or maintaining unchanged the control mode based on the user input and on the confidence value.

Thanks to the confidence value, only the user inputs that are relevant may be taken into account to modify the control mode, i.e. the automatic mode. In other words, the method allows distinguishing user inputs corresponding to singular events, which may be discarded, from user inputs corresponding to stable preferences, which are taken into account to modify the control mode such that it is more personalized to the user.

To classify those singular events, the method according to the disclosure proposes to compute one or two confidence values based on correlating the input to the external illumination and/or analyzing a repetition of the user inputs. Each confidence value allows detecting singular events which are typically related to social interaction or temporary visual fatigue.

The confidence value may for instance be computed based on a correlation, according to a predetermined correlation function, between the initial level of the external illumination and the requested value.

A correlation is here defined as a relation, for instance mathematical or statistical, between two values. Correlating the requested transmission to the external illumination allows detecting a relation between them. When they correlate, it means that that they do not occur together on the basis of chance alone.

For instance, the user input is taken into account when the confidence value is high, since the user input then most probably correspond a preference of the user with respect to the external illumination level. On the other hand, when the confidence value is low, i.e. when the input does not correlate or correlates very little to the external illumination, for instance because both the request value of the transmission and the external illumination are high, the user input will not be taken into account to modify the control mode. Indeed, when both the transmission requested by the user and the external illumination are high, it is highly probable that the user input corresponds to a social interaction.

The confidence value may for instance be computed based on the acquisition, after resetting the transmission value of the variable transmission optical element to a value determined based on the control mode, of a subsequent user input for adjusting the parameter related to the transmission value of the variable transmission optical element.

Assessing a repetition of user inputs, by detecting a subsequent input from the user after returning to the control mode, also allows filtering singular events. Indeed, if the user input corresponds to a stable preference, the user should request again a transmission change. The subsequent input is therefore expected. Conversely, if there is no subsequent input, the input was probably a singular event since the user does not need a transmission change anymore.

Other advantageous features of the method according to the disclosure are:
- in step e6), the control mode is modified or maintained unchanged according to one of the following rules: the higher the confidence value is, the more the user input is taken into account for modifying the control mode, the control mode is modified when the confidence value is greater than a predetermined confidence value and the control mode is maintained unchanged when the confidence value is lower than the predetermined confidence value;
- the control mode is built on a training dataset, and wherein modifying the control mode comprises including the requested value and the initial level of the external illumination into the training dataset and updating the building of the control mode;
- the method further comprises a step of determining a light transmission range based on the initial level of the external illumination, and wherein the predetermined correlation function comprises checking whether or not the requested value is comprised in the light transmission range, the confidence value being computed as higher when the requested value is comprised in the light transmission range than when the requested value is outside of the light transmission range;
- the light transmission range is determined based on at least one of the following: previous choices of a user, statistical data representative of transmission values chosen by a plurality of users in response to the initial level of the external illumination;
- the resetting is performed at the end of a determined period of time, the determined period of time starting when setting the transmission value of the variable transmission optical element to a requested value, the determined period of time being based on at least one of the following: a predetermined time period, a variation of the external illumination, a localization of the variable transmission optical element, a battery level of a battery supplying the variable transmission optical element, a removal of the variable transmission optical element from in front of an eye of a user;
- the subsequent user input is used to set the transmission value to a subsequent requested value, the method further comprising a step of determining a subsequent light transmission range based on the requested value, the confidence value being computed as higher when the subsequent requested value is comprised in the subsequent light transmission range than when the subsequent requested value is outside of the subsequent light transmission range;
- the subsequent light transmission range has a lowest value and a highest value, the lowest value and the highest value being proportional to the requested value;
- the method further comprises measuring a subsequent level of the external illumination when the subsequent user input is acquired, the method further comprising a step of determining an illumination range based on the initial level of the external illumination, the confidence value being computed as higher when the subsequent level of the external illumination is comprised in the illumination range than when the subsequent level of the external illumination is outside of the illumination range;
- the illumination range has a lowest level and a highest level, the lowest level and the highest level being proportional to the initial level of the external illumination;
- the method further comprises a step of triggering a repetition condition when resetting the transmission value, and wherein the confidence value is computed as higher when the subsequent user input is acquired while the repetition condition is still pending than when the subsequent user input is acquired after the repetition condition has lapsed;
- the repetition condition is based on at least one of the following: a time period, a wearing period during which the variable transmission optical element is located in front of a user, a variation of the external illumination;
- the variable transmission optical element comprises an electrochromic lens or a liquid crystal lens.

The disclosure also concerns a system comprising:
- a variable transmission optical element;
- a sensor adapted to measure an external illumination;
- an interface adapted to acquire user inputs,
- a control unit programmed to implement a control mode designed to control a transmission value of the variable transmission optical element as a function of the external illumination;
the control unit being programmed to implement a method comprising the following steps:
e1) measuring an initial level of the external illumination,
e2) setting the transmission value of the variable transmission optical element to an initial value according to the control mode as a function of the initial level of the external illumination,
e3) acquiring a user input for adjusting a parameter related to the transmission value of the variable transmission optical element,
e4) setting, based on the user input and according to a manual mode, the transmission value of the variable transmission optical element to a requested value,
e5) computing, based on the requested value and on the initial level of the external illumination, a confidence value representative of a likelihood that the requested value is a user preference relative to the initial level of the external illumination,
e6) modifying or maintaining unchanged the control mode based on the user input and on the confidence value.

### DETAILED DESCRIPTION OF EXAMPLE(S)

The following description, enriched with joint drawings that should be taken as non-limitative examples, will help understand the disclosure and figure out how it can be realized.

On the appended drawings:
- Figure 1 is a schematic representation of the system 1;
- Figure 2 is a block diagram representing the main steps of the method;
- Figure 3 is a graphical representation of the transmission value of a variable transmission optical element as a function of an external illumination;
- Figure 4 is a block diagram representing the steps of the method of figure 2 according to a first embodiment;
- Figure 5 is a graphical representation of two functions representing the transmission value of a variable transmission optical element as a function of an external illumination;
- Figure 6 is a block diagram representing the steps of the method of figure 2 according to a second embodiment.

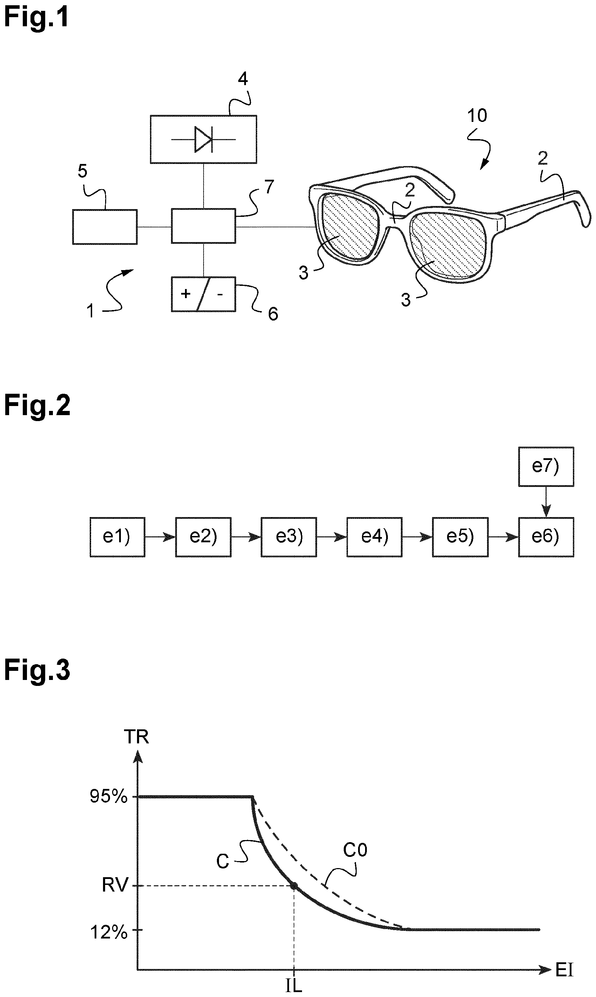

Figure 1 shows a schematic representation of the system 1. The system 1 comprises a variable transmission optical element. Here, as presented in figure 1, the variable transmission optical element comprises an eyewear 10 comprising a frame 2 and at least one lens 3, here two lenses 3 mounted in the frame 2. The eyewear 10 is designed to be worn by a user.

As a variation, the variable transmission optical element comprises any element through which a user may have or need to look through such as sunglasses, ski helmets, windshield, windows, doors of walls, a welding mask.

Each lens 3 is here an ophthalmic lens. Each lens 3 is designed to be placed in front of one of the eyes of the user of the system 1. Each lens 3 may be corrective or non-corrective. Only one lens 3 will be described hereafter and will be referred to as "the lens".

Here, the lens 3 has a variable transmission which means that a transmission value of the lens 3 can be controlled. The transmission value of the lens 3 characterizes the light transmission of the lens 3, that is to say its capacity to transmit light. Classically, the light transmission is opposed to a light absorption and the transmission value is calculated as the ratio of the light intensity traversing the lens 3 to the light intensity received by the lens 3. The light transmission may also be referred to as a transmittance level of the lens 3. The transmission value is here expressed in percentages.

In order to have a variable transmission, the lens 3 is here electrochromic which means that its transmission value is controllable by means of an electrical voltage. The electrochromic lens 3 might be such as those described in WO2018/234515 wherein the lens comprises a layer of an electrochromic medium such as a liquid crystal, a composition comprising oxidizing compound and reducing compound in a solvent or a solid-state electrochromic layer and electrodes to apply a voltage to the layer in order to change is transmittance. The lens 3 may also comprise filters and/or polarizers which can be controlled by a voltage. Here, the eyewear 10 comprises a battery, for instance mounted in the frame 2, adapted to provide this voltage.

As a variation, the lens is a liquid crystal lens. Liquid crystal technology also allows to control the transmission value of the lens by means of an electrical voltage.

For instance, the transmission value of the electrochromic lens 3 may be set to a predetermined number of values, such as four values 95%, 50%, 25%, 12%, ranging from transparent to dark. The transmission value may also be controlled such as to vary substantially continuously. In any case, the transmission value is a physical property of the lens 3 and can take different values, for instance "initial", "requested" or "subsequent requested" values hereafter.

As illustrated in figure 1, the system 1 also comprises a sensor 4, a memory 5, an interface 6 and a control unit 7. Here, the sensor 4, the memory 5, the interface 6 and the control unit 7 are located in or on the frame 2, the system 1 is thus a standalone optical article.

The sensor 4 is adapted to measure an external illumination. This external illumination is representative of light originating from outside of the system 1, for instance sunlight outdoors or artificial lights indoors. The sensor 4 is more particularly adapted to provide an electrical signal representing the light intensity received thereof. The sensor 4 is for example a photodiode, a photoresistor or a phototransistor. The sensor 4 is here mounted in or on the frame 2. When the eyewear 10 is worn by the user, the external illumination then corresponds to an ambient light surrounding the user or an ambient light of an environment located in front of the user, that is to say the ambient light coming from before the user's face. The sensor could be integrated in the control unit 7. The sensor 4 could also be remote.

The sensor 4 is more specifically adapted to measure distinct values of the external illumination, hereafter referred to as levels of the external illumination, for instance "initial" or "subsequent" levels hereafter. In other words, the sensor 4 is adapted to quantify the light intensity received thereof. The external illumination levels are for instance expressed in lux.

The memory 5, here a computer-readable storage medium, comprises instructions allows to operate a control mode, which is also referred to as an automatic mode. The control mode comprises a relationship between the transmission value of the lens 3 and the external illumination measured by the sensor 4. The control mode allows adapting the transmission value of the lens 3 to the external illumination in an autonomous way, that is to say without any intervention of the user. To that end, the control mode is designed to determine the transmission value of the lens 3 as a function of the external illumination. In order to prevent glaze, the higher the external illumination is, the lower the transmission value is (the lens 3 is then relatively dark or tinted).

The control unit 7 is here programmed to implement the control mode. The control unit 7 comprises at least one processor. The control unit 7 is for instance a calculation module, a computer, a mobile device such as a smartphone, a connected watch, or a medical device such as a blood test device. The control unit 7 may comprise a virtual machine located on a cloud network or a sever distant from the eyewear 10.

Here, the control mode is stored in the memory 5 under the form of computer-readable data. Those computer-readable data are for instance representative of a mathematical function, which may for example be represented by a curve C as in figure 3. The mathematical function gives, for each level of the external illumination in input, a value of the transmission value in output. The control mode may also be stored as a value table or as algorithms, for instance under the form of a neural network. Here, the memory 5 is housed in the frame 2.

One the one hand, the control mode is originally predetermined but, on the other hand, the control mode can be modified to suit better with the user's preferences. This means that when the user first uses the eyewear 10, the control mode is already stored in the memory 5. The control mode is for example established when conceiving the system 1. Classically, the control mode is for instance originally designed such as to fit as much potential users as possible. However, in the context of the disclosure, the control mode can be modified, as described in detail afterwards, in order to make it more personalized or customized to the user.

The interface 6 is adapted to acquire user inputs, that is to say inputs from the user. The interface 6 is thus a human-machine interface. The interface 6 is here manually actionable by the user. The interface 6 for instance comprises a touch-sensitive surface or mechanical means such as buttons or a rotating rim. Here, the interface 6 is mounted on the frame 2, for instance on a temple.

As a variation, the interface may be a microphone and the user input may be a voice command.

In any case, the interface 6 is adapted to receive user inputs, that is to say instructions from the user, relative to the transmission value of the lens 3. The interface 6 allows implementing a manual mode of the system 1. The manual mode corresponds to an operating mode "on demand" of the user.

Thanks to the manual mode, the user is able to adapt the transmission value by himself. The manual mode therefore comprises a relationship between the user inputs and the transmission value in the sense that the manual mode allows converting user inputs to transmission values. By way of example, the interface 6 may comprise a plus button and a minus button and the manual mode may then operate by incrementing, or decrement, the transmission value by a predetermined step when the plus button, or respectively the minus button, is pressed by the user. For instance, the manual mode determines that pressing the plus button increases the transmission value of the lens 3 by +10% and pressing the minus button decreases the transmission value of the lens 3 by -10%.

The manual mode is implemented at each user input. The manual mode is typically used when the user wants the transmission value to be different to, i.e. higher or lower than, the one given by the automatic mode. The manual mode is also stored in the memory 5.

The control unit 7 is in particular adapted to set the transmission value of the lens 3. In the one hand, the control unit 7 is adapted to set the transmission value of the lens 3 as a function to the external illumination according to the control mode. In the other hand, the control unit 7 is adapted to set the transmission value of the lens 3 according to user inputs. This means that the control unit 7 is also programmed to implement the manual mode when user inputs are acquired via the interface 6. To set the transmission value of the lens 3, the control unit 7 is for instance adapted to control the voltage provided to the lens 3.

As shown in figure 1, the control unit 7 is also adapted to control the sensor 4 and the interface 6, in particular in the sense that the control unit 7 receives signals provided by the latest, and to access the memory 5. To that end, the control unit 7 comprises connections means to the other elements of the system 1, in particular to the lens 3, the sensor 4, the memory 5 and the interface 6. The control unit 7 is here housed in the frame 2.

The system 1 is here exemplified as a standalone optical article. However, as a variation, one or more elements of the system, in particular such as the interface, may be deported. For instance, the interface may be a touch surface of a smartphone. The interface may be a computer graphical user interface provided with the operating system of the control unit. The interface may be part of the same casing than the control unit. Still in example, the memory and or the control unit may be located, partially or totally, on a distant server. The operations performed by the control unit 7 could then be performed, partially or totally, on the distant server. The system may then comprise wireless connection means to establish communication between its different elements.

The control unit 7 is specifically programmed to implement the steps of the method according to the disclosure represented in figure 2. The memory 5 comprises instructions which, when executed by the control unit 7, cause the control unit 7 to carry out the steps of the method.

The system 1 may also comprise detection means (not represented) adapted to determine whether the eyewear 10 is worn or not.

More specifically, the control unit 7 is configured to implement the following main steps of the method:
- a step e1) of measuring an initial level of the external illumination,
- a step e2) of setting the transmission value of the electrochromic ophthalmic lens 3 to an initial value according to the control mode,
- a step e3) of acquiring a user input, referred to as the initial user input, for adjusting a parameter related to the transmission value of the lens 3,
- a step e4) of setting, according to the manual mode, the transmission value of the electrochromic ophthalmic lens 3 to a requested value,
- a step e5) of computing, based on the requested value of the transmission and on the initial level of the external illumination, a confidence value representative of a likelihood that the requested value of the transmission value is a user preference, i.e. a preference of the user, relative to the initial level of the external illumination,
- a step e6) of modifying or maintaining unchanged the control mode based on the initial user input and on the confidence value.

Firstly, steps e1) and e2) are performed, which corresponds to operating the system 1 according to the control mode. Those steps are performed when the eyewear 10 is worn by the user, that is to say when the lens 3 is being worn in front of an eye of the user.

The measurement of the initial level of the external illumination by the sensor during step e1) is here triggered by the control unit 7. This measurement is for instance performed few tenths of seconds after the user put or turn on the eyewear 10. During step e2), the control unit 7 receives the initial level of the external illumination determined by the sensor 4 and then sets the transmission value of the lens 3 based on the control mode, that is to say as a function of the initial level of the external illumination.

Several iterations of steps e1) and e2) may be performed before the acquisition of the initial user input. The external illumination is for instance measured at regular time intervals and the transmission value set accordingly. The control mode represents here the default mode when no user inputs are acquired.

Secondly, steps e3) and e4) are performed, which corresponds to operating the system 1 according to the manual mode. When a user input is acquired, the manual mode is implemented.

Step e3) is at least partly performed by the user itself. The user performs the initial user input. In particular, when he estimates that the initial value of the transmission value is not adapted to his current situation, he performs the initial user input to adjust the parameter related to the transmission value.

Here, the parameter related to the transmission value parameter is the transmission value itself. In other words, the initial user input is performed for adjusting the transmission value of the lens 3.

As a variation, the parameter related to the transmission value could also be an indication of an activity the user is currently performing or intends to perform, such as driving, or an indication about a localization of the user, for instance indicating whether the wearer is indoor or outdoor, a time of the year, or meteorological conditions of the localization, and the automatic mode adapts the transmission value in consequence.

Consequently, as above described, the control unit 7 sets the transmission value of the lens 3 to a requested value, based on the initial user input and according to the manual mode. The requested value is then representative of the transmission value demanded by the user.

The manual mode is here implemented during a determined period of time. After this period of time, the system 1 is again operated according to the control mode. By way of examples, this period of time is for instance based on: i) a predetermined time period, such as one minute to one hour; ii) a variation of the external illumination, for instance greater than a predetermined level; iii) a localization of the lens 3, for instance based on GPS signal provide by a smartphone of the user; iv) a level of the battery supplying the electrochromic lens 3, v) a removal of the eyewear 10 from in front of the eye of the user, for instance when the user places the eyewear on the top of its head or in a box.

Thirdly, steps e5) and e6) are implemented. Thanks to steps e5) and e6), the modification of the control mode is based, via the confidence value, on the relevancy of the initial user input in the context of the initial level of the external illumination.

More specifically, the confidence value is representative of a likelihood, i.e. a probability, that the requested value of the transmission value is a preference of the user relative to the initial level of the external illumination. In the following, this preference is qualified as "stable" by opposition a singular event is qualified as "punctual".

A stable preference is here defined as a transmission value modification chosen by the user in order to adapt to a given level of the external illumination. Typically, this modification aims at maximizing the comfort of the user for the given level of the external illumination. In other words, a stable preference represents an ideal transmission value with respect to this given level. A stable preference is therefore representative of the fact that the control mode, in particular for this given level, should be more customized for the user.

A singular event is here defined as a transmission value modification which is temporary and specific to a personal situation of the user. A singular event is therefore independent from the external illumination in that sense that it is not provoked by the external illumination. A singular event is for instance a transmission value modification due to a social interaction, for example to maintain eye contact, or to visual fatigue, for instance due to a headache.

Here, the confidence value is computed by the control unit 7, which means that it is calculated by the control unit 7 independently from any intervention of the user, other than the initial user input. The confidence value is typically distinct from a feeling of the user. The confidence value is computed based on the requested value of the transmission value and the initial level of the external illumination in the sense that it depends on, and is associated to, a pair requested value - initial level.

Here, the confidence value is defined by numbers. The confidence value is more specifically a numerical value. In the following, the confidence value can take values between 0 and 1, 0 representing the lowest likelihood that a user input corresponds to a stable preference and 1 representing the highest likelihood that the user input corresponds to a stable preference. Numerical examples relating to the confidence value are then given with respect to this specific 0 to 1 range. Of course, other numerical ranges may be used such as 0% to 100%.

However, the confidence value may also be defined by labels, words, or symbols as long as those are ranked in a specific order. For instance, the confidence value may be computed as one word among a predetermined list, such as: "very low", "low", "medium", "high", "very high". In any case, the confidence value is here to be understood as representing a relative worth.

Then, during step e6), the control mode is modified by taking into account the confidence value or, on the other way around, is maintained unchanged. In a remarkable way, a user input which is more likely to be a singular event than stable preference is not taken into account to modify the control mode, or is less taken into account than another user input which is more likely to be stable preference. A user input which is more likely to be a singular event can even be discarded, for example erased from the memory 7. Therefore, remarkably, the control mode is not modified based on user inputs unrelated to the external illumination, which prevents a degradation the customization of the control mode.

In an example, when the confidence value is higher than a predetermined confidence value, the initial user input is classified as a stable preference and the control mode is modified taking into account the initial user input. Conversely, when the confidence value is lower than the predetermined confidence value, the initial user input is classified as a punctual event and the control mode is maintain unchanged with respect to the initial user input. The confidence value thus allows selecting which user inputs to take into account in order to customize the control mode and which ones to exclude.

The predetermined confidence value is for instance 0.5. The predetermined confidence value may be closer to the upper limit of the range, for instance 0.8, in order to modify the control mode on the user inputs which are very likely to be stable preferences. The method is then more selective on the user inputs taken into account to modify the control mode in the sense that fewer user inputs are susceptible to be taken into account.

In another example, the higher the confidence value is, the more the initial user input is taken into account for modifying the control mode. When taken into account to modify the control mode, the initial user inputs are for example weighted by a coefficient proportional to the confidence value. The coefficients weighting the user inputs may also be linked to the confidence value by a monotonic non-linear relationship, for instance an exponential relationship. In this example, with respect to several user inputs, computing each confidence value allow sorting the user inputs from the most likely to be a stable preference to the least likely and to weight them accordingly to modify the model.

The modification of the control mode is implemented by means of known methods. Modifying the control mode based on initial user input means that the modification is based on at least one among the initial level of the external illumination and the requested value of the transmission value, that is to say on the initial level only, the requested value only, or both the initial level and the requested value. The activities of the user can also be used to modify the control mode.

As an example, when the control mode is built on a training dataset, modifying the control mode comprises including the requested value of the transmission value and/or the initial level of the external illumination into the training dataset and updating the building of the control mode. Here, the control mode being "built on a training dataset" refers to methods known as machine learning, for instance based on neural network.

Still in example, when the control mode is represented by a curve C as in figure 3, the function defining this curve C may be updated based on the position of the initial user inputs in the two-dimensional space external illumination EI - transmission value TR. For instance, as shown in figure 3, in the interval wherein the transmission value TR varies from its maximum (95%, clear state) to its minimum (12%, dark state), a regression is performed so that the curve C fits the point whose coordinates are the initial level IL and the requested value RV. In figure 3, the original control mode, i.e. before modification based on user inputs, is represented by the dashed curve referenced C₀.

As a variation, in particular when the regression curve has a limited number of degrees of freedom, only the initial level or only the requested value may be taken into account to modify the control mode, the other being associated to a predetermined value of the control mode (e.g. a discrete level of tint such as 95%, 50%, 25%, 12%). For instance, only the initial level may be taken into account to adjust the lowest level of the external illumination which triggers the tinting of the lens, regardless of the requested value.

Steps e5) and e6) can be performed while the user is wearing the eyewear 10. In this way, the control mode is dynamically customized for the user thanks to the user inputs representative of stable preferences. As a variation, steps e5) and/or step e6) may be performed later on when the user does not wear the eyewear 10 anymore, by keeping data in memory. It may be more advantageous, in particular in terms of computing power, to modify the control mode at once based on several user inputs than successively modifying the control mode based on each user inputs.

Advantageously, the method also comprises a step e7) comprising the acquisition of environmental data. The environmental data are representative the conditions in which the eyewear 10 is used such as a date or a localization or an activity performed by the user when the initial user input is acquired. During step e6), modifying the control mode is then also based on the environmental data. In this way, the control mode may be even more customized to the user. Alternatively, thanks to step e7), it is possible to design several particular control modes based on the environmental data, for instance a particular control mode for summer and a particular control mode for winter, or a particular control mode for driving, or a particular control mode for outdoors sport activities or specific location such as seaside or snow-covered places.

### First embodiment

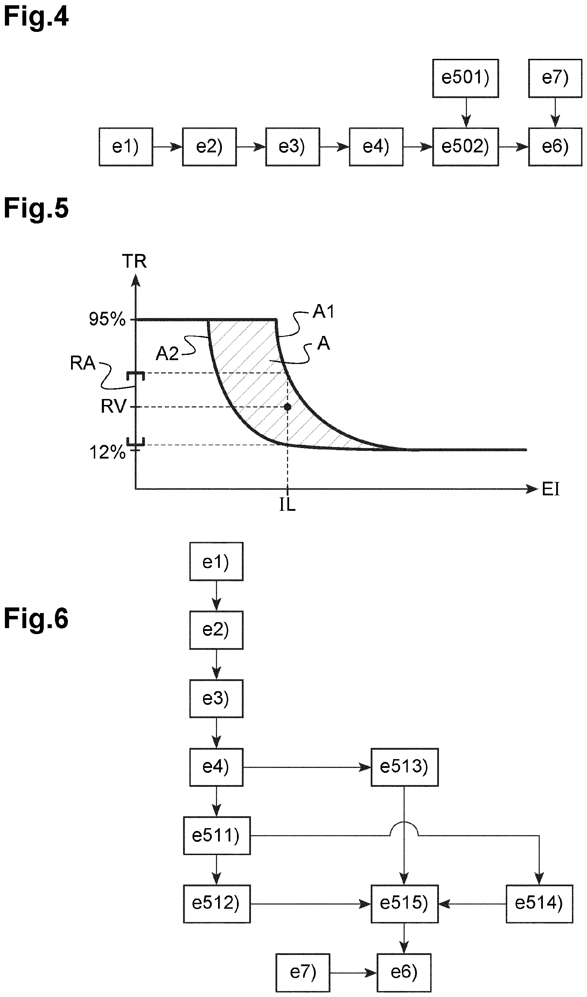

In a first embodiment of the method according to the disclosure, represented in figures 4 and 5, step e5) is based on a correlation. More specifically, the computation of the confidence value is based on a correlation, according to a first correlation function, between the initial level of the external illumination and the requested value of the transmission value.

The first correlation function is here predetermined in the sense that the memory 5 comprises, prior to implementing the method according to the disclosure, correlation data characterizing the first correlation function.

Here, the correlation data allows determining, for a given level of the external illumination, a light transmission range. Correlation data then comprises a plurality of light transmission ranges corresponding to a plurality of levels of the external illumination. A light transmission range is here defined as plurality of values of the transmission value comprised between a minimum value of the transmission value and a maximum value of the transmission value.

By way of an example, for a given level of the external illumination, the light transmission range is determined based on the most frequent values of the transmission value which are required by a plurality of users for this given level of the external illumination. In other words, the light transmission range is based on statistical data representative of the values of the transmission value which are chosen by the plurality of users in response to the given level of the external illumination. For instance, the light transmission range corresponds to 90% of the most frequent values of the transmission value which are chosen by the plurality of users for the given level of the external illumination, the light transmission range being encompassed by the 5% of the least frequent values corresponding to both the highest and lowest transmission value values. The plurality of users might be selected based on similarity with the user (age, light sensibility). Of course, the numerical percentages mentioned above may be adapted.

Still in example, for a given level of the external illumination, the light transmission range may be determined based on previous choices of the user. The correlation data are for example previously collected through a dedicated series of test performed by the user equipped with the eyewear 10.

The correlation data may be graphically represented in the two-dimensional space external illumination EI - transmission value TR, as illustrated in figure 5. The combination or sum of the plurality of light transmission ranges here defines a correlation area A comprised between an upper curve A1 and a lower curve A2.

Following the example wherein the light transmission ranges are determined based on a plurality of users, at a given level of the external illumination, the upper curve A1 may correspond to the value of the transmission value for which 95% of the chosen values are lower, and the lower curve A2 may correspond to the value of the transmission value for which 95% of the chosen value are higher.

As shown in figure 5, above a certain level of the external illumination, the light transmission range comprises only a maximum value of the transmission value, for instance 90% (there, the upper curve A1 and the lower curve A2 are superimposed). This can be interpreted, for instance, as the plurality of users always choosing the full tinting of the lens 3 above this level. The other way around, below a certain level of the external illumination, the light transmission range comprises only a minimum value of the transmission value, for instance 0% (there also, the upper curve A1 and the lower curve A2 are superimposed). This can be interpreted, for instance, as the plurality of users never choosing to darken the lens 3 below this level.

As shown in figure 4, in this first embodiment, step e5) comprises a sub-step e501) of determining an initial light transmission range based on the initial level of the external illumination. Here, determining the initial light transmission range comprises selecting, among the plurality of light transmission ranges in memory, the light transmission range associated with the initial level of the external illumination. This selection is graphically represented in figure 5. The initial light transmission range RA corresponds to the intersection of the correlation area A and the axis of abscissa equal to initial level IL of the external illumination EI.

In this first embodiment, step e5) continues with a sub-step e502) of computing the confidence value by implementing the first correlation function. Here, the first correlation function comprises checking the belonging of the requested value to the initial light transmission range, i.e. verifying that the requested value is included in the initial light transmission range.

During the sub-step e502), the confidence value is computed as higher when the requested value is comprised in the initial light transmission range than when the requested value is outside the initial light transmission range.

For instance, the confidence value is computed as 1 when the requested value is comprised in the initial light transmission range and the confidence value is computed as 0 when the requested value is outside the initial light transmission range.

With respect to the graphical representation of the correlation data shown figure 5, the first correlation function comprises checking whether or not the point whose coordinated are the initial level IL and the requested value RV is comprised in the correlation area A. When reducing the correlation area A, for instance by defining it as 60% of the most frequent values of the transmission value for each level of the external illumination, the correlation criterion is stricter, which means that the probability that the initial user inputs is outside of correlation area A is higher.

As a variation of this first embodiment, the first correlation function may comprise determining a distance between the requested value and a central value of the initial light transmission range. The shorter this distance is, the higher the confidence value. The confidence value can then take continuous values.

Still in variation, several light transmission ranges may be determined for the initial level. For instance, a central light transmission range and a side light transmission range encompassing the central light transmission range. The first correlation function may comprise checking the belonging of the requested value to each transmission range. The confidence value may for instance be computed as 1 when the requested value is in the central light transmission range, as 0.5 when the requested value is in the side light transmission range but not in the central light transmission range, and as 0 when the requested value is not even comprised in the side light transmission range. More light transmission ranges may be used to discretize even more the values the confidence value can take. All the transmission ranges may be determined based on the choices of a plurality of users, for instance the 90% more frequent transmission value values for the side transmission value rang and the 70% more frequent ones for the central light transmission range.

### Second embodiment

In a second embodiment represented in figure 6, step e5) is based on a repetition of user inputs. The computation of the confidence value is more specifically based on the acquisition, after the initial user input, of a subsequent user input after returning to the control mode. In a general manner, the confidence value is higher when another user input is acquired than when no other user input is acquired. Indeed, if the initial user input corresponds to a stable preference, the user should request again a transmission change after returning to the control mode. The subsequent user input is therefore expected. As described later on, the confidence value is even higher when the subsequent user input meets determined conditions.

As shown in figure 6, in this second embodiment, step e5) comprises a sub-step 511) comprising returning from the manual mode to the control mode. More specifically, sub-step 511) comprises, after step e4), resetting the transmission value of the lens 3 to a value determined based on the control mode. In sub-step e511), the transmission value of the lens 3 is for example reset to the initial value or to another value determined, based on another measurement of the external illumination, according to the control mode.

Resetting the transmission value, i.e. returning to the control mode, is performed at the end of the determined period of time above-mentioned. The determined period is timed from setting the transmission value of the lens 3 to the requested value, that is to say from step e4).

In this second embodiment, step e5) then continues with a sub-step e512) of acquiring, by means of the interface 6, a subsequent user input for adjusting the transmission value of the electrochromic lens 3. Here, the term "subsequent" means that the subsequent user input follows the initial user input, in the sense that it is acquired after the initial user input. At step e512), the subsequent user input is used to set the transmission value to a subsequent requested value, according to the manual mode, as previously described. When the subsequent user input is acquired, a subsequent level of the external illumination is also measured by the sensor 4.

Preferentially, the confidence value is determined as higher when the subsequent user input correlates to the first user inputs, according to a second correlation function, than when it is uncorrelated to the initial user inputs.

In case of stables preferences, with similar levels of the external illumination, the user is expected to demand similar values of the transmission value. Put differently, it is more likely that the initial user input represents a sable preference when the subsequent user input is similar to the initial user input. Advantageously, the second correlation function allows defining whether the initial user input and the subsequent user input are similar regarding the external illumination and/or the transmission value of the lens 3.

In order to implement the second correlation function, step e5) comprises a sub-step e513) comprising the determination of a neighborhood of the initial user input. The second correlation function then comprises checking the belonging of the subsequent user input to the neighborhood of the initial user input.

Here, the neighborhood is defined both in terms of external illumination and in terms of transmission value, with respect to the initial user input. The neighborhood comprises more specifically a subsequent light transmission range and illumination range.

The subsequent light transmission range is determined based on the requested value such as to include the requested value. The subsequent light transmission range is for instance determined so that it has a lowest value and a highest value, the lowest value and the highest value being proportional to the requested value. As an example, the lowest value is for instance half the requested value and the highest value twice the requested value. Still in example, the lowest value is comprised between a tenth of the requested value and the requested value while the highest value is comprised between the requested value and ten times the requested value.

The illumination range is determined based on the initial level such as to include the initial level. The illumination range is for instance determined so that is has a lowest level and a highest level, the lowest level and the highest level being proportional to the initial level. As an example, the lowest level is one third of the initial level and the highest level is three times the initial level. Still in example, the lowest level is comprised between a tenth of the initial level and the initial level while the highest level is comprised between the initial level and ten times the initial level.

As shown in figure 6, once the neighborhood of the initial user input is determined at sub-step e513), the confidence value is computed at a sub-step 515) by implementing the second correlation function.

Checking the belonging of the subsequent user input to the neighborhood of the initial user input, i.e. implementing the second correlation function, comprises checking the belonging of the subsequent requested value to the subsequent light transmission range or the belonging of the subsequent level to the illumination range. The confidence value is then computed as higher when the subsequent requested value is comprised in the subsequent light transmission range than when the subsequent requested value outside the subsequent light transmission range. Then confidence value is also computed as higher when the subsequent level is comprised in the illumination range than when subsequent level is outside the illumination range.

Preferentially, checking the belonging of subsequent user input to the neighborhood of the initial user input comprises checking the belonging of the subsequent requested value to the subsequent light transmission range and the belonging of the subsequent level to the illumination range.

The confidence value is then computed as higher when the subsequent requested value is comprised in the subsequent light transmission range and when the subsequent level is comprised in the illumination range than when the subsequent requested value outside the subsequent light transmission range or the illumination range than when the subsequent level is outside the illumination range. The confidence value is also computed as higher when the subsequent requested value is comprised in the subsequent light transmission range but the subsequent level is outside the illumination range or when the subsequent requested value is outside the subsequent light transmission range but the subsequent level is comprised in the illumination range than when subsequent requested value is outside the subsequent light transmission range and the subsequent level is outside the illumination range.

For instance, the confidence value is computed as 1 when subsequent requested value is comprised in the subsequent light transmission range and when subsequent level is comprised in the illumination range. The confidence value is then computed as 0.5 when the subsequent requested value is comprised in the subsequent light transmission range but the subsequent level is outside the illumination range or when the subsequent requested value is outside the subsequent light transmission range but the subsequent level is comprised in the illumination range. The confidence value is computed as 0 when subsequent requested value is outside the subsequent light transmission range and the subsequent level is outside the illumination range.

As a variation, several illumination ranges may be determined. For instance, a central illumination range (e.g. ranging from half to twice the initial level) and a side illumination range (e.g. ranging from one tenth to ten times the initial level) encompassing the central illumination range. The second correlation function may comprise checking the belonging of the subsequent level to each illumination range. The confidence value may for instance be computed as 1 when the subsequent level is comprised in the central illumination range, as 0.5 when the subsequent level is comprised in the side illumination range but not in the central illumination range, and as 0 when the subsequent level is not even comprised in the side illumination transmission range.

As a variation, several subsequent light transmission ranges may be determined. For instance, a central subsequent light transmission range (e.g. ranging from half to twice the requested value) and a side subsequent light transmission range (e.g. ranging from one tenth to ten times the requested value) encompassing the central subsequent light transmission range. The second correlation function may comprise checking the belonging of the subsequent requested value to each subsequent light transmission range. The confidence value may for instance be computed as 1 when the subsequent requested value is in the central subsequent light transmission range, as 0.5 when the subsequent requested value is in the side subsequent light transmission range but not in the central subsequent light transmission range, and as 0 when the subsequent requested value is not even comprised in the side illumination transmission range.

As debrided above, the neighborhood may be determined based on initial level and the initial value so that is dynamically depends on those. As a variation, the neighborhood may comprise predetermined ranges, for the external illumination and for the transmission value.

For instance, several illumination ranges may be predetermined, such as 100 - 1000 lux, 1000 - 10 000 lux and 10 000 - 100 000 lux. The second correlation function then comprises checking whether or not the subsequent level of the external illumination is included in the same predetermined illumination range as the initial level of the external illumination. The confidence value is then computed as higher when the subsequent level is included in the same predetermined illumination range as the initial level than when the subsequent level and the initial level belong to distinct predetermined illumination ranges.

In a similar way, several subsequent light transmission ranges might be predetermined, such as 12 - 25%, 25 - 50% and 50 - 95%. The second correlation function then comprises checking whether or not the subsequent request value of the transmission value is included in the same predetermined subsequent light transmission range as the requested value of the transmission value. The confidence value is then computed as higher when the subsequent requested value is included in the same predetermined subsequent light transmission range as the requested value than when the subsequent requested value and the requested value belong to distinct predetermined subsequent light transmission ranges.

As illustrated in figure 6, in this second embodiment, step 5) also comprises a sub-step e514) of triggering a repetition condition. As figure 6 shows it, the repetition condition is activated when returning to the control mode, i.e. when resetting the transmission value according at step e511).

At step e515), the confidence value is computed as higher when the subsequent user input is acquired while the repetition condition is still pending than when the subsequent user input is acquired after the repetition condition has lapsed.

Indeed, it is more likely that the initial user input represents a sable preference when the subsequent user input is acquired shortly after returning to the control mode. Put the other way around, it means that when the subsequent user input is acquired late after returning to the control mode, it is more likely that the initial user input and the subsequent user input are uncorrelated. Advantageously, the repetition condition allows taking into account the time elapsed between the initial user and the subsequent user input in the computation of the confidence value.

The repetition condition is more specifically a repetition or temporal criterion allowing to determine a reference moment. This reference moment is then compared to the moment of acquisition of the subsequent user input. The subsequent user input being "acquired while the repetition condition is still pending" means that the moment of acquisition of the subsequent user input temporally precedes the reference moment. The subsequent user input being "acquired after the repetition condition has lapsed" means that the reference moment temporally precedes the moment of acquisition of the subsequent user input.

By way of an example, at step e515), the confidence value is computed as 1 when the subsequent user input is acquired while the repetition condition is still pending and as 0 when the subsequent user input is acquired after the repetition condition has lapsed.

Still in example, the confidence value may also be computed as a function of the time elapsed between the moment of acquisition of the subsequent user input and the reference moment. For instance, the confidence value may be proportional to the time elapsed between the moment of acquisition of the subsequent user input and the reference moment, down to zero when the moment of acquisition of the subsequent user input and the reference moment coincide.

Here, the repetition condition is predetermined.

The repetition condition is for instance based on a time period. This time period is for example comprised between 1 minutes and 1 hour. In this case, the reference moment is calculated as the moment of acquisition of the initial user input plus the time period.

The repetition condition is for instance based on a wearing period during which the lens 3 is worn in front of the eye. This wearing period is for example comprised between 1 minutes and 20 minutes. Remarkably, this allows considering an effective time during which the eyewear 10 is worn. The repetition condition is thus not affected by periods during which the user remove the eyewear 10. To that end, the detection means adapted to determine whether the eyewear 10 is worn or not are activated. In this case, the reference moment is calculated as the moment of acquisition of the initial user input plus wearing period.

The repetition condition may also be based on a variation of the external illumination. The variation is for instance a predetermined absolute variation, for instance comprised between 1 000 lux and 10 000 lux, or a predetermined relative level, for instance a doubling of the external illumination. This allows taking into account the reaction of the user to an event. If the user does not react to such an event, meaning that the subsequent user input occurred after the variation, the confidence value is computed as low since the user was expected to react. In this case, the reference moment is the moment the variation occurs or the moment the variation occurs plus a short time such as one to five minutes.

By way of a variation, the confidence value may be computed directly based on a time interval between the acquisition of the initial user input and the acquisition of the subsequent user input, that is to say without triggering a repetition condition. The shorter this time interval is, the higher the confidence value is.

### Third embodiment

In a third embodiment, the computation of the confidence value is based both on the correlation, as described in the first embodiment, and on the repetition of user inputs, as described in the second embodiment. In other words, the third embodiment is a combination of the first embodiment and of the second embodiment.

By way of an example, step e5) may be performed two times. One time according to the first embodiment and one time according to the second embodiment. A first intermediary confidence value is computed according to the first embodiment and a second intermediary confidence value is computed according to the second embodiment.

Then, the confidence value is determined as a combination of the first intermediary confidence value and a second intermediary confidence value. For instance, the first and second intermediary confidence values can range from 0 to 1, and the confidence value is determined as the product of the first and second intermediary confidence values.

The two implementations of step e5), according to the first and the second embodiments, may be performed in parallel or sequentially.

Advantageously, performing them sequentially allows determining a cutoff value for the intermediary confidence value which is firstly computed. When the intermediary confidence value which is firstly computed is below the cutoff value, the other embodiment is nor implement, which saves time and computing power. In this case, the control mode is maintained unchanged. The cutoff value is for instance comprised between 0 and 0.5.

As an example, step e5) according to the first embodiment is implemented first. If the first intermediary confidence value is computed as 0, step e5) according to the second embodiment is not implemented, which means for instance that the neighbor is not even determined, and the repetition condition is not even triggered. Alternatively, step e5) according to the second embodiment is implemented first and step e5) according to the first embodiment is not implemented when the second intermediary confidence value is below the cutoff value.

## Claims

1. Computer-implemented method for modifying a control mode of a variable transmission optical element based on user inputs, the control mode being designed to control a transmission value (TR) of the variable transmission optical element as a function of an external illumination (EI), the method comprising the following steps:
e1) measuring an initial level (IL) of the external illumination (EI),
e2) setting the transmission value (TR) of the variable transmission optical element to an initial value according to the control mode as a function of the initial level (IL) of the external illumination (EI),
e3) acquiring a user input for adjusting a parameter related to the transmission value (TR) of the variable transmission optical element,
e4) setting, based on the user input and according to a manual mode, the transmission value (TR) of the variable transmission optical element to a requested value (RV),
e5) computing, based on the requested value (RV) and on the initial level (IL) of the external illumination (EI), a confidence value representative of a likelihood that the requested value (RV) is a user preference relative to the initial level (IL) of the external illumination (EI),
e6) modifying or maintaining unchanged the control mode based on the user input and on the confidence value.

2. Method according to claim 1, wherein, in step e6), the control mode is modified or maintained unchanged according to one of the following rules:
- the higher the confidence value is, the more the user input is taken into account for modifying the control mode;
- the control mode is modified when the confidence value is greater than a predetermined confidence value and the control mode is maintained unchanged when the confidence value is lower than the predetermined confidence value.

3. Method according to claim 1 or 2, wherein the control mode is built on a training dataset, and wherein modifying the control mode comprises including the requested value (RV) and the initial level (IL) of the external illumination (EI) into the training dataset and updating the building of the control mode.

4. Method according to any one of claims 1 to 3, wherein computing the confidence value is based on a correlation, according to a predetermined correlation function, between the initial level (IL) of the external illumination (EI) and the requested value (RV).

5. Method according to claim 4, comprising a step of determining a light transmission range based on the initial level (IL) of the external illumination (EI), and wherein the predetermined correlation function comprises checking whether or not the requested value (RV) is comprised in the light transmission range, the confidence value being computed as higher when the requested value (RV) is comprised in the light transmission range than when the requested value (RV) is outside of the light transmission range.

6. Method according to claim 4 or 5, wherein the light transmission range is determined based on at least one of the following:
- previous choices of a user;
- statistical data representative of transmission values (TR) chosen by a plurality of users in response to the initial level (IL) of the external illumination (EI).

7. Method according to any one of claims 1 to 6, wherein computing the confidence value is based on the acquisition, after resetting the transmission value (TR) of the variable transmission optical element to a value determined based on the control mode, of a subsequent user input for adjusting the parameter related to the transmission value (TR) of the variable transmission optical element.

8. Method according to claim 7, wherein the resetting is performed at the end of a determined period of time, the determined period of time starting when setting the transmission value (TR) of the variable transmission optical element to a requested value (RV), the determined period of time being based on at least one of the following: a predetermined time period, a variation of the external illumination (EI), a localization of the variable transmission optical element, a battery level of a battery supplying the variable transmission optical element, a removal of the variable transmission optical element from in front of an eye of a user.

9. Method according to claim 7 or 8, wherein the subsequent user input is used to set the transmission value (TR) to a subsequent requested value, the method further comprising a step of determining a subsequent light transmission range based on the requested value (RV), the confidence value being computed as higher when the subsequent requested value is comprised in the subsequent light transmission range than when the subsequent requested value is outside of the subsequent light transmission range.

10. Method according to claim 9, wherein the subsequent light transmission range has a lowest value and a highest value, the lowest value and the highest value being proportional to the requested value (RV).

11. Method according to any one of claims 7 to 10, comprising measuring a subsequent level of the external illumination (EI) when the subsequent user input is acquired, the method further comprising a step of determining an illumination range based on the initial level (IL) of the external illumination (EI), the confidence value being computed as higher when the subsequent level of the external illumination (EI) is comprised in the illumination range than when the subsequent level of the external illumination (EI) is outside of the illumination range.

12. Method according to claim 11, the illumination range has a lowest level and a highest level, the lowest level and the highest level being proportional to the initial level (IL) of the external illumination (EI).

13. Method according to any one of claims 7 to 12, further comprising a step of triggering a repetition condition when resetting the transmission value (TR), and wherein the confidence value is computed as higher when the subsequent user input is acquired while the repetition condition is still pending than when the subsequent user input is acquired after the repetition condition has lapsed.

14. Method according to claim 13, wherein the repetition condition is based on at least one of the following:
- a time period,
- a wearing period during which the variable transmission optical element is located in front of a user,
- a variation of the external illumination (EI).

15. System (1) comprising:
- a variable transmission optical element;
- a sensor (4) adapted to measure an external illumination (EI);
- an interface (6) adapted to acquire user inputs,
- a control unit (7) programmed to implement a control mode designed to control a transmission value (TR) of the variable transmission optical element as a function of the external illumination (EI);
the control unit (7) being programmed to implement a method comprising the following steps:
e1) measuring an initial level (IL) of the external illumination (EI),
e2) setting the transmission value (TR) of the variable transmission optical element to an initial value according to the control mode as a function of the initial level (IL) of the external illumination (EI),
e3) acquiring a user input for adjusting a parameter related to the transmission value (TR) of the variable transmission optical element,
e4) setting, based on the user input and according to a manual mode, the transmission value (TR) of the variable transmission optical element to a requested value (RV),
e5) computing, based on the requested value (RV) and on the initial level (IL) of the external illumination (EI), a confidence value representative of a likelihood that the requested value (RV) is a user preference relative to the initial level (IL) of the external illumination (EI),
e6) modifying or maintaining unchanged the control mode based on the user input and on the confidence value.

## Patentansprüche

1. Computerimplementiertes Verfahren zum Modifizieren eines Steuermodus eines optischen Elements mit variabler Transmission basierend auf Benutzereingaben, wobei der Steuermodus dazu gestaltet ist, einen Transmissionswert (TR) des optischen Elements mit variabler Transmission in Abhängigkeit einer externen Beleuchtung (EI) zu steuern, das Verfahren umfassend die folgenden Schritte:
e1) Messen eines Ausgangspegels (IL) der externen Beleuchtung (EI),
e2) Einstellen des Transmissionswerts (TR) des optischen Elements mit variabler Transmission auf einen dem Steuermodus entsprechenden Ausgangswert in Abhängigkeit von dem Ausgangspegel (IL) der externen Beleuchtung (EI),
e3) Erfassen einer Benutzereingabe zum Einstellen eines Parameters in Verbindung mit dem Transmissionswert (TR) des optischen Elements mit variabler Transmission,
e4) Einstellen, basierend auf der Benutzereingabe und einem manuellen Modus entsprechend, des Transmissionswerts (TR) des optischen Elements mit variabler Transmission auf einen angeforderten Wert (RV),
e5) Berechnen, basierend auf dem angeforderten Wert (RV) und auf dem Ausgangspegel (IL) der externen Beleuchtung (EI), eines Konfidenzwerts, der für eine Wahrscheinlichkeit steht, dass der angeforderte Wert (RV) eine Benutzerpräferenz in Bezug auf den Ausgangspegel (IL) der externen Beleuchtung (EI) ist,
e6) Modifizieren oder unverändert Belassen des Steuermodus basierend auf der Benutzereingabe und auf dem Konfidenzwert.

2. Verfahren nach Anspruch 1, wobei in Schritt e6) der Steuermodus nach einer der folgenden Regeln modifiziert oder unverändert belassen wird:
- je höher der Konfidenzwert ist, desto stärker wird die Benutzereingabe zum Modifizieren des Steuermodus in Betracht gezogen;
- der Steuermodus wird modifiziert, wenn der Konfidenzwert höher ist als ein vorbestimmter Konfidenzwert und der Steuermodus wird unverändert belassen, wenn der Konfidenzwert niedriger ist als der vorbestimmte Konfidenzwert.

3. Verfahren nach Anspruch 1 oder 2, wobei der Steuermodus auf einem Trainingsdatensatz aufgebaut ist und wobei das Modifizieren des Steuermodus das Einschließen des angeforderten Werts (RV) und des Ausgangspegels (IL) der externen Beleuchtung (EI) in den Trainingsdatensatz und das Aktualisieren des Aufbauens des Steuermodus umfasst.

4. Verfahren nach einem der Ansprüche 1 bis 3, wobei das Berechnen des Konfidenzwerts auf einer Korrelation gemäß einer vorbestimmten Korrelationsfunktion zwischen dem Ausgangspegel (IL) der externen Beleuchtung (EI) und dem angeforderten Wert (RV) basiert.

5. Verfahren nach einem der Ansprüche 4, umfassend einen Schritt des Bestimmens eines Lichttransmissionswertebereichs basierend auf einem Ausgangspegel (IL) der externen Beleuchtung (EI)und wobei die vorbestimmte Korrelationsfunktion das Prüfen umfasst, ob der angeforderte Wert (RV) in dem Lichttransmissionswertebereich liegt, wobei der Konfidenzwert als höher berechnet wird, wenn der angeforderte Wert (RV) in dem Lichttransmissionswertebereich liegt als wenn der angeforderte Wert (RV) außerhalb des Lichttransmissionswertebereichs liegt.

6. Verfahren nach Anspruch 4 oder 5, wobei der Lichttransmissionswertebereich bestimmt wird basierend auf mindestens einem von:
- vorherigen Entscheidungen eines Benutzers;
- statistischen Daten, die für Transmissionswerte (TR) stehen, ausgewählt durch eine Vielzahl von Benutzern als Reaktion auf den Ausgangspegel (IL) der externen Beleuchtung (EI).

7. Verfahren nach einem der Ansprüche 1 bis 6, wobei das Berechnen des Konfidenzwerts basiert auf dem Erfassen, nach dem Zurücksetzen des Transmissionswerts (TR) des optischen Elements mit variabler Transmission auf einen Wert, der bestimmt wird basierend auf dem Steuermodus, einer folgenden Benutzereingabe zum Einstellen des Parameters in Verbindung mit dem Transmissionswert (TR) des optischen Elements mit variabler Transmission.

8. Verfahren nach Anspruch 7, wobei das Zurücksetzen am Ende eines bestimmten Zeitraums durchgeführt wird, wobei der bestimmte Zeitraum beginnt, wenn der Transmissionswert (TR) des optischen Elements mit variabler Transmission auf einen angeforderten Wert (RV) eingestellt wird, wobei der bestimmte Zeitraum auf mindestens einem basiert von: einem vorbestimmten Zeitraum, einer Variation der externen Beleuchtung (EI), einer Lokalisierung des optischen Elements mit variabler Transmission, einem Batterieladezustand einer Batterie, die das optische Element mit variabler Transmission versorgt, einem Entfernen des optischen Elements mit variabler Transmission von einer Position vor einem Auge eines Benutzers.

9. Verfahren nach Anspruch 7 oder 8, wobei die folgende Benutzereingabe eingesetzt wird, um den Transmissionswert (TR) auf einen folgenden angeforderten Wert einzustellen, das Verfahren ferner umfassend einen Schritt des Bestimmens eines folgenden Lichttransmissionswertebereichs basierend auf dem angeforderten Wert (RV), wobei der Konfidenzwert als höher berechnet wird, wenn der folgende angeforderte Wert in dem folgenden Lichttransmissionswertebereich liegt als wenn der folgende angeforderte Wert außerhalb des folgenden Lichttransmissionswertebereichs liegt.

10. Verfahren nach Anspruch 9, wobei der folgende Lichttransmissionswertebereich einen niedrigsten Wert und einen höchsten Wert aufweist, wobei der niedrigste Wert und der höchste Wert proportional zu dem angeforderten Wert (RV) sind.

11. Verfahren nach einem der Ansprüche 7 bis 10, umfassend das Messen eines folgenden Pegels der externen Beleuchtung (EI), wenn die folgende Benutzereingabe erfasst wird, das Verfahren ferner umfassend einen Schritt des Bestimmens eines Beleuchtungswertebereichs basierend auf dem Ausgangspegel (IL) der externen Beleuchtung (EI), wobei der Konfidenzwert als höher berechnet wird, wenn der folgende Pegel der externen Beleuchtung (EI) in dem Beleuchtungswertebereich liegt als wenn der folgende Pegel der externen Beleuchtung (EI) außerhalb des Beleuchtungswertebereichs liegt.

12. Verfahren nach Anspruch 11, wobei der Beleuchtungswertebereich einen niedrigsten Pegel und einen höchsten Pegel aufweist, wobei der niedrigste Pegel und der höchste Pegel proportional zum Ausgangspegel (IL) der externen Beleuchtung (EI) sind.

13. Verfahren nach einem der Ansprüche 7 bis 12, ferner umfassend einen Schritt des Auslösens einer Wiederholungsbedingung beim Zurücksetzen des Transmissionswerts (TR) und wobei der Konfidenzwert höher berechnet wird, wenn die folgende Benutzereingabe erfasst wird, während die Wiederholungsbedingung noch aussteht als wenn die folgende Benutzereingabe erfasst wird, nachdem die Wiederholungsbedingung verfallen ist.

14. Verfahren nach Anspruch 13, wobei die Wiederholungsbedingung auf mindestens einem basiert von:
- einem Zeitraum,
- einem Tragezeitraum, während dessen das optische Element mit variabler Transmission sich vor einem Benutzer befindet,
- einer Variation der externen Beleuchtung (EI).

15. System (1), umfassend:
- ein optisches Element mit variabler Transmission;
- einen Sensor (4), dazu angepasst, eine externe Beleuchtung (EI) zu messen;
- eine Schnittstelle (6), dazu angepasst, Benutzereingaben zu erfassen,
- eine Steuereinheit (7), dazu programmiert, einen Steuermodus zu implementieren, dazu gestaltet, einen Transmissionswert (TR) des optischen Elements mit variabler Transmission in Abhängigkeit von der externen Beleuchtung (EI) zu steuern;
wobei die Steuereinheit (7) dazu programmiert ist, ein Verfahren zu implementieren, umfassend die folgenden Schritte:
e1) Messen eines Ausgangspegels (IL) der externen Beleuchtung (EI),
e2) Einstellen des Transmissionswerts (TR) des optischen Elements mit variabler Transmission auf einen dem Steuermodus entsprechenden Ausgangswert in Abhängigkeit von dem Ausgangspegel (IL) der externen Beleuchtung (EI),
e3) Erfassen einer Benutzereingabe zum Einstellen eines Parameters in Verbindung mit dem Transmissionswert (TR) des optischen Elements mit variabler Transmission,
e4) Einstellen, basierend auf der Benutzereingabe und einem manuellen Modus entsprechend, des Transmissionswerts (TR) des optischen Elements mit variabler Transmission auf einen angeforderten Wert (RV),
e5) Berechnen, basierend auf dem angeforderten Wert (RV) und auf dem Ausgangspegel (IL) der externen Beleuchtung (EI), eines Konfidenzwerts, der für eine Wahrscheinlichkeit steht, dass der angeforderte Wert (RV) eine Benutzerpräferenz in Bezug auf den Ausgangspegel (IL) der externen Beleuchtung (EI) ist,
e6) Modifizieren oder unverändert Belassen des Steuermodus basierend auf der Benutzereingabe und auf dem Konfidenzwert.

## Revendications

1. Procédé mis en œuvre par ordinateur pour modifier un mode de commande d'un élément optique à transmission variable sur la base des entrées d'utilisateur, le mode de commande étant conçu pour commander une valeur de transmission (TR) de l'élément optique à transmission variable en fonction d'un éclairage externe (EI), le procédé comprenant les étapes suivantes :
e1) mesure d'un niveau initial (IL) de l'éclairage externe (EI),
e2) réglage de la valeur de transmission (TR) de l'élément optique à transmission variable à une valeur initiale selon le mode de commande en fonction du niveau initial (IL) de l'éclairage externe (EI), e3) acquisition d'une entrée d'utilisateur pour ajuster un paramètre lié à la valeur de transmission (TR) de l'élément optique à transmission variable,
e4) réglage, sur la base de l'entrée d'utilisateur et selon un mode manuel, de la valeur de transmission (TR) de l'élément optique à transmission variable à une valeur demandée (RV),
e5) calcul, sur la base de la valeur demandée (RV) et du niveau initial (IL) de l'éclairage externe (EI), d'une valeur de confiance représentative d'une vraisemblance que la valeur demandée (RV) est une préférence d'utilisateur par rapport au niveau initial (IL) de l'éclairage externe (EI),
e6) modification ou maintien inchangé du mode de commande sur la base de l'entrée d'utilisateur et de la valeur de confiance.

2. Procédé selon la revendication 1, à l'étape e6), le mode de commande étant modifié ou maintenu inchangé selon l'une des règles suivantes :
- plus la valeur de confiance est élevée, plus l'entrée d'utilisateur est prise en compte pour modifier le mode de commande ;
- le mode de commande est modifié lorsque la valeur de confiance est supérieure à une valeur de confiance prédéterminée et le mode de commande est maintenu inchangé lorsque la valeur de confiance est inférieure à la valeur de confiance prédéterminée.

3. Procédé selon la revendication 1 ou 2, le mode de commande étant construit sur un ensemble de données d'entraînement, et la modification du mode de commande comprenant l'inclusion de la valeur demandée (RV) et du niveau initial (IL) de l'éclairage externe (EI) dans l'ensemble de données d'entraînement et la mise à jour de la construction du mode de commande.

4. Procédé selon l'une quelconque des revendications 1 à 3, le calcul de la valeur de confiance étant basé sur une corrélation, selon une fonction de corrélation prédéterminée, entre le niveau initial (IL) de l'éclairage externe (EI) et la valeur demandée (RV).

5. Procédé selon la revendication 4, comprenant une étape de détermination d'une plage de transmission lumineuse sur la base du niveau initial (IL) de l'éclairage externe (EI), et la fonction de corrélation prédéterminée comprenant la vérification si la valeur demandée (RV) est comprise ou non dans la plage de transmission lumineuse, la valeur de confiance étant calculée comme étant plus élevée lorsque la valeur demandée (RV) est comprise dans la plage de transmission lumineuse que lorsque la valeur demandée (RV) est en dehors de la plage de transmission lumineuse.

6. Procédé selon la revendication 4 ou 5, la plage de transmission lumineuse étant déterminée sur la base d'au moins un des éléments suivants :
- les choix antérieurs d'un utilisateur ;
- des données statistiques représentatives des valeurs de transmission (TR) choisies par une pluralité d'utilisateurs en réponse au niveau initial (IL) de l'éclairage externe (EI).

7. Procédé selon l'une quelconque des revendications 1 à 6, le calcul de la valeur de confiance étant basé sur l'acquisition, après réinitialisation de la valeur de transmission (TR) de l'élément optique à transmission variable à une valeur déterminée sur la base du mode de commande, d'une entrée d'utilisateur ultérieure pour ajuster le paramètre lié à la valeur de transmission (TR) de l'élément optique à transmission variable.

8. Procédé selon la revendication 7, la réinitialisation étant effectuée à la fin d'une période de temps déterminée, la période de temps déterminée commençant lors du réglage de la valeur de transmission (TR) de l'élément optique à transmission variable à une valeur demandée (RV), la période de temps déterminée étant basée sur au moins l'un des éléments suivants : une période de temps prédéterminée, une variation de l'éclairage externe (EI), une localisation de l'élément optique à transmission variable, un niveau de batterie d'une batterie alimentant l'élément optique à transmission variable, un retrait de l'élément optique à transmission variable de devant un œil d'un utilisateur.

9. Procédé selon la revendication 7 ou 8, l'entrée d'utilisateur ultérieure étant utilisée pour régler la valeur de transmission (TR) sur une valeur demandée ultérieure, le procédé comprenant en outre une étape de détermination d'une plage de transmission lumineuse ultérieure sur la base de la valeur demandée (RV), la valeur de confiance étant calculée comme étant plus élevée lorsque la valeur demandée ultérieure est comprise dans la plage de transmission lumineuse ultérieure que lorsque la valeur demandée ultérieure est en dehors de la plage de transmission lumineuse ultérieure.

10. Procédé selon la revendication 9, la plage de transmission lumineuse ultérieure ayant une valeur la plus basse et une valeur la plus haute, la valeur la plus basse et la valeur la plus haute étant proportionnelles à la valeur demandée (RV).

11. Procédé selon l'une quelconque des revendications 7 à 10, comprenant la mesure d'un niveau ultérieur de l'éclairage externe (EI) lorsque l'entrée d'utilisateur ultérieure est acquise, le procédé comprenant en outre une étape de détermination d'une plage d'éclairage sur la base du niveau initial (IL) de l'éclairage externe (EI), la valeur de confiance étant calculée comme étant plus élevée lorsque le niveau ultérieur de l'éclairage externe (EI) est compris dans la plage d'éclairage que lorsque le niveau ultérieur de l'éclairage externe (EI) est en dehors de la plage d'éclairage.

12. Procédé selon la revendication 11, la plage d'éclairage ayant un niveau le plus bas et un niveau le plus haut, le niveau le plus bas et le niveau le plus haut étant proportionnels au niveau initial (IL) de l'éclairage externe (EI).

13. Procédé selon l'une quelconque des revendications 7 à 12, comprenant en outre une étape de déclenchement d'une condition de répétition lors de la réinitialisation de la valeur de transmission (TR), et la valeur de confiance étant calculée comme étant plus élevée lorsque l'entrée d'utilisateur ultérieure est acquise alors que la condition de répétition est encore en attente que lorsque l'entrée d'utilisateur ultérieure est acquise après que la condition de répétition s'est écoulée.

14. Procédé selon la revendication 13, la condition de répétition étant basée sur au moins l'un des éléments suivants :
- une période de temps,
- une période de port pendant laquelle l'élément optique à transmission variable est placé devant un utilisateur,
- une variation de l'éclairage externe (EI).

15. Système (1) comprenant :
- un élément optique à transmission variable ;
- un capteur (4) adapté pour mesurer un éclairage externe (EI) ;
- une interface (6) adaptée pour acquérir des entrées d'utilisateur,
- une unité de commande (7) programmée pour mettre en œuvre un mode de commande conçu pour commander une valeur de transmission (TR) de l'élément optique à transmission variable en fonction de l'éclairage externe (EI) ;
l'unité de commande (7) étant programmée pour mettre en œuvre un procédé comprenant les étapes suivantes :
e1) mesure d'un niveau initial (IL) de l'éclairage externe (EI),
e2) réglage de la valeur de transmission (TR) de l'élément optique à transmission variable à une valeur initiale selon le mode de commande en fonction du niveau initial (IL) de l'éclairage externe (EI),
e3) acquisition d'une entrée d'utilisateur pour ajuster un paramètre lié à la valeur de transmission (TR) de l'élément optique à transmission variable,
e4) réglage, sur la base de l'entrée d'utilisateur et selon un mode manuel, de la valeur de transmission (TR) de l'élément optique à transmission variable à une valeur demandée (RV),
e5) calcul, sur la base de la valeur demandée (RV) et du niveau initial (IL) de l'éclairage externe (EI), d'une valeur de confiance représentative d'une vraisemblance que la valeur demandée (RV) est une préférence d'utilisateur par rapport au niveau initial (IL) de l'éclairage externe (EI),
e6) modification ou maintien inchangé du mode de commande sur la base de l'entrée d'utilisateur et de la valeur de confiance.
